# EUROPEAN PATENT SPECIFICATION

(11) **EP 1 191 489 B1**
(45) Date of publication and mention of the grant of the patent: **07.06.2006**
(21) Application number: 01122496.1
(22) Date of filing: 20.09.2001
(51) Int. Cl.: G07D 5/00

(54) **Device for identification of coins, transponders and electronic credit storing means**
Vorrichtung zur Identifizierung von Münzen, Transpondern und elektronischen Guthabenspeicherungsmitteln
Dispositif pour l'identification de pièces de monnaie, transpondeurs et moyens de stockage de crédit électronique

(30) Priority: 22.09.2000 IT BO000545
(43) Date of publication of application: 27.03.2002
(73) Proprietor: O.T.R. S.r.l., 40069 Zola Predosa (Bologna) (IT)
(72) Inventor: Rigo, Fabrizio, 40132 Bologna (IT)
(74) Representative: Dall'Olio, Giancarlo

(56) References cited:
- EP-A- 0 965 957
- DE-A- 19 512 878
- US-A- 5 697 482

## Description

The present invention relates to electronic devices for identification and storing of credit values, to be used in stations and/or machines for automatic distribution of goods and/or services, video games, etc., with particular reference to devices for identification of predetermined coins, transponders and/or electronic credit storing means.

Different types of stations and/or machines for automatic distribution of goods and/or services have heretofore been provided, as featuring a suitable device for identification of coins and/or transponders introduced thereto.

A device of this type, e.g. an electronic slot machine, identifies, according to known techniques, the kind of coin introduced therein by the user; if the coin corresponds to one of the models for which the slot machine is used, it is collected, otherwise it is given back to the user.

When the value of the introduced and collected coins reaches the value of a corresponding good and/or service, the electronic slot machine operates the distributor to deliver the article.

It is obvious that the user must have a big number of coins, in relation to the importance of the required service or to the quantity and value of the required goods.

Obviously, this necessity is very inconvenient for the user, who must always be sure to have a big number of coins, which are not always easy to find and which are also heavy and cumbersome.

The electronic slot machines of the stations and/or machines for automatic distribution of goods and/or services can be substituted or integrated by another device which is situated on the machine outer surface and aimed solely at introducing and identifying of only electronic credit storing means.

The encoded electronic means for credit values storing, e.g. a transponder or electronic keys, are distinguished by an identification code and can be charged up to the credit value desired by the user, upon paying a suitable sum of money.

In this case, after the identification, a suitable device interacts with the transponder or the electronic keys, so as to make a credit transition and operate the distributor to deliver the desired article.

However, the application of an additional device for identification of electronic credit storing means changes the aesthetic look of the outer surface of the stations and/or machines for automatic distribution of goods and/or services, video games stations, etc.

Moreover, the possibility to set up an area on the outer surface of the distributors and beside the slot machines for application of the transponder identification device, must be taken into consideration during the machine design.

In order to avoid the above problems, the Applicant has proposed, in the Application for Industrial Invention No. BO98A 000382, which has been filed as European Patent Application published under the number EP0965957, a device for accepting and identifying either predetermined coins or transponders introduced therein.

The object of the present invention is to propose a universal device which is suited to introduction and identification of predetermined coins and transponders as well as electronic credit storing means, which are introduced therein momentarily and partially.

Another object of the present invention is to propose a universal device which can be mounted onto already existing slot machines for identification of coins only, by adapting them to the introduction and identification and interaction with transponders, as well as to the momentary introduction, identification and interaction with electronic credit storing means.

A further object of the present invention is to propose a universal device for identification of coins, transponders and electronic credit storing means which does not change in any way the aesthetic look of the distributors of goods and/or services, video games stations, etc.

Still another object of the present invention is to propose a device which prevents a user, previously provided with a suitable transponder or suitable electronic credit storing means, from useless waste of time for looking for big number of coins.

Yet further object of the present invention is to propose a universal device for identification and subsequent encoded storing of credit, which is quick in operation and easy to use for anyone, thus reducing the time necessary for obtaining the required goods and/or services.

Still a further object of the present invention is to propose a universal device which not only identifies and interacts with transponders and with electronic credit storing means, but also charges them in a rapid and simple way.

It is also an object of the invention to propose a device by a simple, extremely reliable technical solution, which device should be also functional and cheap.

The above mentioned objects are achieved by the features of the independent claim, while preferred features are defined in the dependent claims.

This characteristic features of the invention will be pointed out in the following detailed description of some preferred, but not exclusive embodiments with reference to the accompanying drawings, in which:
- Figure 1 is a schematic, front sectional view of the proposed universal device in some working steps particularly important for the identification of electronic credit storing means O momentarily introduced therein;
- Figure 1A is a schematic view of various kinds of coins M and transponders T aimed at being introduced into the universal device as well as of electronic credit storing means O aimed at being momentarily introduced in and subsequently withdrawn from the proposed universal device;
- Figures 2 and 3 are schematic and front section views of other embodiments of the proposed universal device.

With reference to the above mentioned figures, reference numeral 1 generally indicates a box-like case, numeral 11 indicates a first rectangular slot for introduction of the predetermined coins M or circular transponders T, and numeral 13 indicates a second slot for a possible rejection of the coin or returning of the transponder.

The first rectangular slot 11, situated in the upper part of the case 1, on its front surface, accessible from outside, forms a mouth of a sliding channel 15. The shape of the channel, i.e. its width and height, is such that different types of coins or transponders can be freely received thereby.

The sliding channel 15 extends inside the case 1, from its top downwards, so as to guide the coin or transponder along a well defined path on different levels.

Sensor means 161, connected to a control unit 17, are situated in the sliding channel 15, on its lateral walls and near the slot 11.

The sensor means 161 are aimed at detecting and identifying of predetermined coins or transponders.

In fact, the sensor means 161 detect possible variations of the medium placed therebetween and react if a coin or a transponder has been introduced; in case of a transponder, they detect its identifying code.

Each type of coin and each transponder code is associated with a signal or impulse which will be sent to the control unit 17.

The above mentioned first slot 11 can be also used for introduction of electronic credit storing means O, which are introduced into the sliding channel 15 until they reach electronic data reading/writing sensor 171 situated downstream of the sensor means 161 and connected to the control unit 17 via an interface.

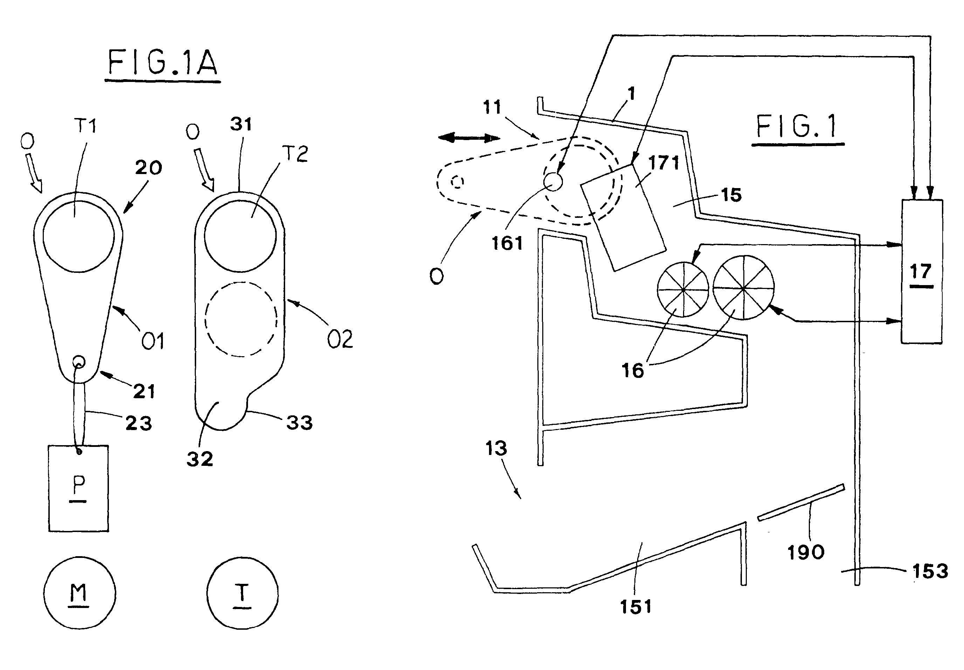

The electronic credit storing means O can be formed, as shown for instance in Figure 1A, by association of a transponder T1 and a support O1 inside which the transponder is inserted.

The profile of a first end 20 of the support O1 allows to introduce it, through the first slot 11, into the sliding channel 15 and to position the transponder near the electronic data reading/writing sensor 171 .

The second end 21 of the support O1 has a coupling device 23 for coupling with a key case P.

Obviously, the support O1 can be shaped to receive more transponders T1: in this case, one transponder can contain credit, another transponder an access code and/or a code for enabling the distributing machine to deliver determined services and so on.

Possibly, the second end 21 can have an anatomic shape to make it easier for a user to grip it.

In this case, the above mentioned sensor means 161 detect the identifying code of the transponder introduced in the support 01.

Moreover, the transponder T1 can be located within the support O1 and fixed in an indentation. In this case the transponder T1 can be removed from the support O1 and introduced into the device through the first slot 11.

Moreover, the electronic credit storing means O can be an electronic key O2, whose first end 31 has a profile which passes through the first slot 11 and can be introduced into the sliding channel 15, up to the electronic data reading/writing sensor 171. The second end 32 of the electronic key forms an anatomic handle 33.

The electronic key O2, also according to this particular embodiment, can contain one or more transponders T2 with relative credit values and/or identifying codes and/or access codes for different functions of the machine distributing goods and/or services.

In this case, the sensor means 161 detect the identifying code of the transponder or transponders introduced into the electronic key O2.

The above sensor means 161 are aimed also at detecting possible introduction of electronic credit storing means O and sending a proper signal to the control unit 17, which will operate the electronic data reading/writing sensor 171 in order to check the credit remaining in the electronic credit storing means.

The control unit 17 send signals also to an outer LED (not shown), which is activated when a value necessary for the delivery of the required good or service has been detracted from the credit stored in the means O.

This way, the user will be made aware that he can remove the electronic credit storing means O from the slot 11. The information signal can be visualized on a suitable outer display or by an acoustic signal.

Detection and identification means 16 are also situated in the sliding channel 15, downstream of the sensor means 161. The detection and identification means 16 for the identification of a particular type of the coin introduced, are connected with the control unit 17.

The detection and identification means 16 can be formed by coils which act as a primary coil and a secondary coil of a transformer and detect and identify characteristic features of each type of coin (e.g. type of material, mass, shape, etc.). In this way the value of the coin is determined.

Obviously, the detection and identification means 16 are activated by the control unit 17 when a signal is sent to the latter by the sensor means 161, after the introduction of a coin instead of a transponder or electronic credit storing means has been detected.

The control unit 17 is also connected, by known connecting means, with baffle means 190, situated on the final level of the sliding channel 15 and capable of assuming two different positions.

When in their first position, the baffle means 190 join the terminal part of the sliding channel 15 to the mouth of a connecting channel 153; when in their second position, the baffle means 190 join the sliding channel 15 to a discharge channel 151, at the end of which there is the second slot 13.

The joining of the sliding channel 15 to the connecting channel 153 allows to collect the coins identified as valid, while the joining of the sliding channel to the discharge channel 151 allows to eject the unidentified coins or transponders.

Moreover, the joining of the sliding channel 15 and the connecting channel 153 can allow to collect the transponders run out of credit, according to the needs of the administrator of the stations and/or automatic machines for distribution of goods and services.

This can be particularly useful in amusements arcades, where it is convenient for the owner to get back the transponders out of credit, to re-charge them and sell again to the users.

The control unit 17 is suitably programmed, according to information received from the electronic data reading/writing sensor 171 in case of transponder, or from the detection and identification means 16 in case of coins, to activate the baffle means 190 in the desired position: either collecting coins and/or transponders, or rejecting non identified coins and returning of transponders.

Operation of the proposed device will be described in the following, beginning from introduction of a coin M or a circular transponder T or electronic credit storing means O.

In the first case, a coin is introduced in the first slot 11 so that it falls down in the sliding channel 15.

The sensor means 161 detect the introduction of a coin and send a command to the control unit 17 to activate the detection and identification means 16.

The coin follows the path defined by the sliding channel 15 and passes between the detection and identification means 16 which detect the characteristic features of the coin thus identifying it.

Then the detection and identification means 16 send to the control unit 17 a signal corresponding to the detected type of coin.

If the control unit 17 identifies the type of signal as known and corresponding to a predetermined type of coin, it enables the baffle means 190 to assume the position in which they join the sliding channel 15 to the connecting channel 153.

This way, the coin can arrive to the credit storing device and increase the collected credit to reach the value of the desired good and/or service.

Otherwise, if the control unit 17 does not identify the received signal as known, it enables the baffle means 190 to assume the position in which they join the sliding channel 15 to the discharge channel 151, so as to reject the coin which appears in the second slot 13.

In a second case, a transponder of circular form is introduced in the first slot 11 so that it falls down in the sliding channel 15.

The sensor means 161 detect the introduction of a transponder T and identify its identification code.

Then the sensor means 161 send to the control unit 17 a signal to activate the electronic data reading/writing sensor 171 .

The transponder follows the path defined by the sliding channel 15 and passes through the electronic data reading/writing sensor 171 which detects if the credit of the transponder is enough to deliver the desired good and/or service.

In affirmative case, the electronic data reading/writing sensor 171 detracts the sum relative to the required good and/or service from the stored credit value.

The control unit 17 activates the baffle means 190 so as to assume the position in which it joins the sliding channel 15 to the discharge channel 151.

This way, the transponder with the stored credit value remained, is returned to the user through the second slot 13.

In negative case, the electronic data reading sensor 171 can detect that the transponder is out of credit or that the stored credit value is lower than the requested value.

In this case, the electronic data reading sensor 171 sends a signal to the control unit 17 to operate the baffle means 190, so as to join the sliding channel 15 to the discharge channel 151, so as to return the transponder to the user and possibly inform him/her, by a suitable display, that the credit stored therein is not big enough or run out.

The same operations are carried out also in case the sum relative to the value of requested good and/or service is equal to the transponder credit.

If requested by the administrator of stations and/or automatic machines for distribution of goods and/or services, it is also possible to program the control unit 17 so that the baffle means 190 join the sliding channel 15 to the connecting channel 153, so as to collect the transponders out of credit.

In this case, the administrator will store new credit values in the transponder, whereas if the transponder is returned to the user, the user himself will store the new credit value therein.

In a third case, the user introduces partially the electronic credit storing means O in the slot 11, positioning the end 20 containing the transponder, or the end 31 containing the identification code of the electronic credit storing means O in correspondence to the electronic data reading/writing sensor 171.

The sensor means 161 detect immediately that electronic credit storing means O have been introduced instead of a coin and send to the control unit 17 a signal to activate the electronic data reading/writing sensor 171, which detects if the credit of the electronic credit storing means O is enough to deliver the desired good and/or service.

In affirmative case, the electronic data reading/writing sensor 171 detracts the sum relative to the required good and/or service from the stored credit value.

When the above operation occurs, the control unit 17 activates the outer LED or visualizes the information on the outer display, so as to communicate to the user that the electronic credit storing means O can be withdrawn.

Thus, the user can withdraw the electronic credit storing means O through the first slot 11.

In the negative case, the control unit 17 activates the outer LED, in a predetermined way, so as to communicate to the user that the credit stored in his/her electronic credit storing means O is not big enough or run out.

According to a particularly interesting embodiment of the proposed universal device, not shown in the enclosed figures, the electronic data reading/writing sensor 171 can be situated directly on the outer surface of the case 1, in correspondence to the first slot 11, e.g. around the edges of the latter.

In this way, the electronic data reading/writing sensor 171 can act on electronic credit storing means O which are only brought near to the first slot 11, without being introduced therein.

Therefore, it is evident how the operations necessary to obtain the requested good or service are rapid and simple.

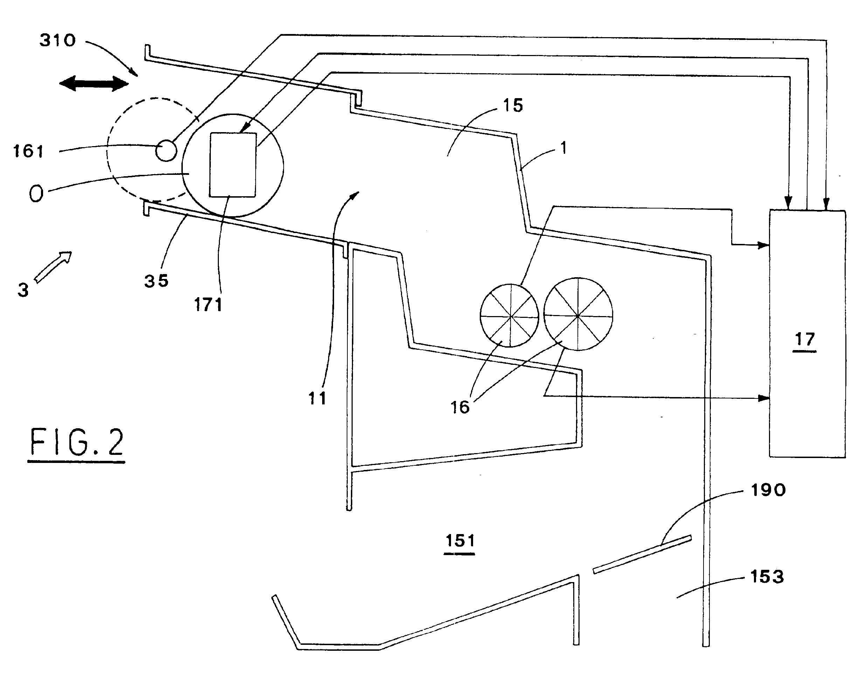

Figure 2 shows a particularly interesting embodiment of the proposed device.

According to the embodiment of Figure 2, the reference numeral 1 indicates an ordinary slot machine for introduction and identification of coins only. The slot machine 1 includes the sliding channel 15, the detection and identification means 16, the control unit 17, the discharge channel 151, the connecting channel 153 and the baffle means 190.

The above slot machine 1 can be adapted to identify transponders and electronic credit storing means O, e.g. of the type described previously with reference to Figure 1A, by adding an outer unit 3, including an inlet channel 35 which joins with the mouth of the sliding channel 15 in the area of the slot 11.

A sensor means 161 and an electronic data reading/writing sensor 171 are situated inside the channel 15.

The sensor means 161, suitably connected with the control unit 17 by known interface means, send a signal to the control unit that a transponder T or electronic credit storing means O have been introduced and read their identification code.

The electronic data reading/writing sensor 171, interfaced with the control unit 17 by known means, detects possible credit still stored in the transponder T and detracts therefrom the sum corresponding to the value of the requested good or service.

If coins have been introduced into the slot machine, the sensor means 161 detect the passage of coins instead of a transponder or the introduction of electronic credit storing means O and order the control unit 17 to activate the detection and identification means 16.

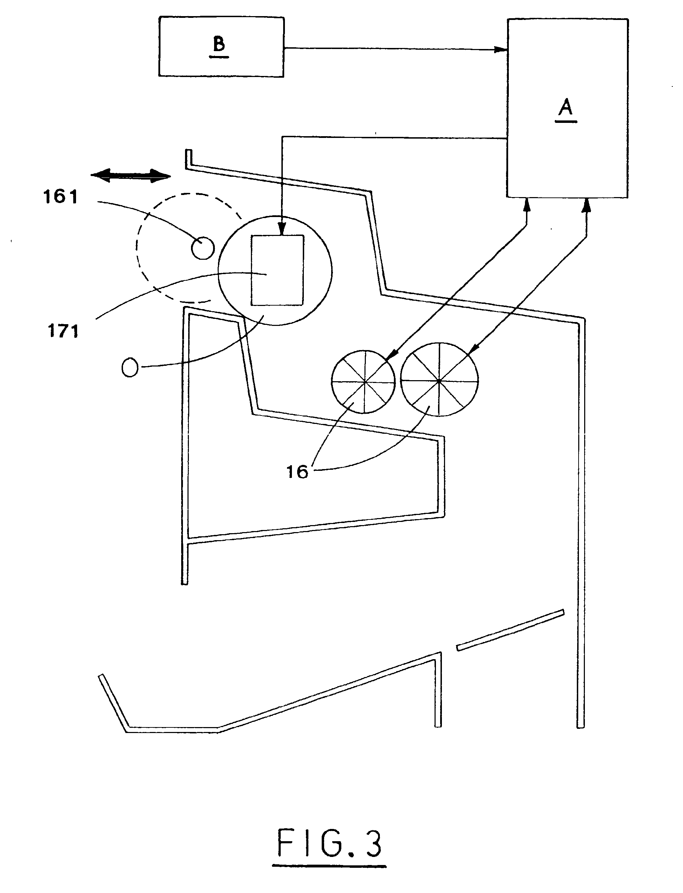

The universal device for identification of predetermined coins, transponders and/or electronic credit storing means can be also equipped, as shown in Figure 3, with a credit updating electronic element A, so as to allow the user to personally recharge the electronic credit storing means, of the type described with reference to Figure 1A, which is out of credit.

The credit updating electronic element A is interfaced, by known means, with the electronic data reading sensor 171 as well as with the detection and identification means 16.

If the electronic credit storing means are out of credit, it is enough to introduce such a number of coins, as to reach the desired recharge value; the detection and identification means 16 detect the value of single coins and send a signal to the electronic element A which stores the credit.

After having reached the desired value, the electronic data reading/writing sensor 171 of the electronic element A updates the credit of the electronic credit storing means.

By using the transponders, it is also possible modify and update the credit rapidly, without stopping them.

Moreover, a banknote reader B can be connected to the credit updating electronic element A, for collecting a credit necessary to store a new credit value in the transponder or in the electronic credit store means.

Also in the last two cases, the electronic data reading/writing sensor 171 can be situated directly in the area of either the first slot 11 or the inlet slot 310 of the additional unit.

One of the advantages of the present invention is that it proposes a universal device, obtained by all described embodiments, which is able to receive and identify predetermined coins and transponders as well as electronic credit storing means, introduced therein momentarily and partially.

This advantageously allows the user, previously equipped with a suitable transponder or electronic credit storing means, to avoid useless waste of time to look for a big number of coins.

Moreover, it is to be pointed out that the proposed universal device can be easily associated to already in-operation slot machines, adapting these machines to identification of transponders without changing the look of the outer surface of the distributing machines.

Another advantage of the present invention is that it proposes a device, which is easy to use for anyone and rapid in the operation, thus reducing the time necessary for obtaining the required goods and/or services.

It is also to be pointed out that the elements of the proposed device are simple to manufacture and few, which reduces production costs.

The above mentioned advantages are obtained by a simple, extremely reliable technical solution, which is also functional and cheap.

## Claims

1. Universal device for identification of predetermined coins, electronic credit storing means and transponders, the device including a case (1) having, on its outer surface, a first rectangular slot (11) for introduction of coins (M) and transponders (T), and a second rectangular slot (13) for ejection of coins (M) and transponders (T), said case (1) featuring, within itself, a sliding channel (15) and a discharge channel (151), which are situated in series and extend downwards from said first slot (11) to said second slot (13), said case (1) including also a control unit (17) connected to sensor means (161) situated on lateral walls of said sliding channel (15), near the first slot (11), for detecting either the introduction of said predetermined coins (M) or the identification code of said transponders (T), said control unit (17) being also connected to electronic data reading/writing means (171), which read the remaining credit in said transponders (T) and which are situated on the lateral walls of said sliding channel (15) downstream of said sensor means (161), with said electronic data reading/writing means (171) controlled by said control unit (17) to modify, by reading/writing, the remaining credit value in said electronic credit storing means (O), previously introduced in said first slot (11) until they have reached the area of the electronic data reading/writing means (171);
said universal device being **characterized in that** said electronic credit storing means (O) are formed by association of at least one transponder (T1) situated inside a support (O1), said support (O1) having a first end (20) with a profile allowing said support (O1) to be introduced, through the first slot (11), into said sliding channel (15) and having a second end (21) featuring a coupling device (23) for coupling with a key carrier (P), so that said electronic credit storing means (O) being ready to be withdrawn from the first slot (11) when a signal sent by said control unit (17) indicates to the user that the transaction has been completed and that the user can remove the means (O) from the slot.

2. Universal device, according to claim 1, **characterized in that** said electronic data reading/writing means (171) are situated on the outer surface of said case (1) in the area of said first slot (11) around the edges thereof, said electronic data reading/writing means (171) being aimed at modifying, by reading/writing, the remaining credit value of the electronic credit storing means (O), or of a transponder (T), brought near to said first slot (11) from outside.

3. Universal device, according to claim 1, **characterized in that** said electronic credit storing means (O) are formed by association of at least one transponder (T1) situated inside a support (O1), said support (O1) having a first end (20) with a profile allowing said support (O1) to be introduced, through the first slot (11), into said sliding channel (15) and having a second end (21) shaped in a way such that it can be used as a key carrier.

4. Universal device, according to claim 1, **characterized in that** said electronic credit storing means (O) are formed by association of at least one transponder (T1) situated inside a support (O1), said support (O1) having a first end (20) with a profile allowing said support (O1) to be introduced, through the first slot (11), into said sliding channel (15) and a second end (21) with anatomic shape to make it easier for a user to grip it.

5. Universal device, according to claim 1 or 3 or 4, **characterized in that** at least one transponder (T1) can be removed from the support (O1) and introduced, through said first slot (11), in said universal device, said transponder (T1) being first subjected to the action of reading/writing of said electronic data reading/writing means (171) during its passage along said sliding channel (15), and then returned by said discharge channel (151) through said second slot (13) or collected by the same universal device.

6. Universal device, according to claim 1, **characterized in that** said electronic credit storing means (O) include an electronic key (02), whose first end (31) is shaped so as to receive at least one transponder (T2) and to pass through the first slot (11) and be introduced into the sliding channel (15), and whose second end (32) has an anatomic handle (33), to make it easier for a user to grip it.

7. Universal device, according to claim 1, **characterized in that** said signal enabling the removal of the electronic credit storing means (O) is transmitted by a LED.

8. Universal device, according to claim 1, **characterized in that** said signal enabling the removal of the electronic credit storing means (O) is an acoustic signal.

9. Universal device, according to claim 1, **characterized in that** said signal enabling the removal of the electronic credit storing means (0) is a message visualized on a display.

10. Universal device, according to claim 1, **characterized in that** it includes detection and identification means (16), which are situated in the walls of said sliding channel (15), downstream of said sensor means (161), and interfaced with said control unit (17), and which are aimed at detecting and identifying the passage of said predetermined coins (M).

11. Universal device, according to claim 10, **characterized in that** said detection and identification means (16) are coils.

12. Universal device, according to claim 1, **characterized in that** it includes baffle means (190) operated by said control unit (17) to join said sliding channel (15) to either a connecting channel (153), in order to collect said coins (M) or transponders (T) with the credit run out, or to said discharge channel (151) to reject the unidentified coins (M) or the transponders (T) with some credit remained.

13. Universal device, according to claim 1 or 10, **characterized in that** said detection and identification means (16) are identical with said sensor means (161).

14. Universal device, according to claim 1 or 10, **characterized in that** said detection and identification means (16) are identical with said electronic data reading/writing sensor means (171).

15. Universal device, according to any of the previous claims, **characterized in that** said sensor means (161), said electronic data reading/writing means (171) and said detection and identification means (16) are situated inside an additional unit (3), situated outside said case (1), with said additional unit (3) including an inlet channel (35) which joins with the mouth of the sliding channel (15) in the area of the slot (11) and which has an inlet slot (310) for introduction of said electronic credit storing means (O).

16. Universal device, according to any of the previous claims, **characterized in that** it includes a credit value storing and updating electronic element (A) interfaced both with said detection and identification means (16), for accumulating credit corresponding to the value of introduced coins (M), and with said reading/writing means (171) for credit updating and recharge of said introduced transponders (T) and for credit updating and recharge of said electronic credit storing means, introduced momentarily in the device or brought close to the first slot (11).

17. Universal device, according to claim 15, **characterized in that** a banknote reader (B) is connected to said electronic element (A).

## Patentansprüche

1. Universalvorrichtung zur Identifizierung von vorgegebenen Münzen, Transpondern und elektronischen Guthabenspeicherungsmitteln, wobei die Vorrichtung ein Gehäuse (1) umfasst, das an seiner Außenseite einen ersten rechteckigen Schlitz (11) zum Einführen von Münzen (M) und Transpondern (T) und einen zweiten rechteckigen Schlitz (13) zum Auswerfen von Münzen (M) und Transpondern (T) umfasst, wobei das Gehäuse (1) als Merkmal in sich selbst einen Gleitkanal (15) und einen Abgabekanal (151) aufweist, die hintereinander angeordnet sind und sich von dem ersten Schlitz (11) nach unten zu dem zweiten Schlitz (13) erstrecken, wobei das Gehäuse (1) auch eine Steuereinheit (17) enthält, die nahe dem ersten Schlitz (11) mit an Seitenwänden des Gleitkanals (15) angeordneten Sensormitteln (161) verbunden ist, um entweder das Einführen der vorgegebenen Münzen (M) oder den Identifizierungscode der Transponder (T) zu detektieren, wobei die Steuereinheit (17) auch mit elektronischen Datenlese- und -schreibmitteln (171) verbunden ist, welche das verbleibende Guthaben in den Transpondern (T) lesen, und welche an den Seitenwänden des Gleitkanals (15) stromab von den Sensormitteln (161) angeordnet sind, wobei die c-lektronischen Datenlese- und -schreibmittel (171) von der Steuereinheit (17) gesteuert werden, um durch Lesen/Schreiben den verbleibenden Guthabenwert in den elektronischen Guthabenspeieberungsmitteln (10) zu modifizieren, der vorher in den ersten Schlitz (11) eingeführt wurde, bis er den Bereich der elektronischen Guthabenspeicherungsmittel (171) erreicht hat;
wobei die Universalvorrichtung **dadurch gekennzeichnet ist, dass** die e-lektronischen Guthabenspeicherungsmittel (0) durch Zuordnung von mindestens einem Transponder (T1) gebildet werden, der in einem Halter (01) angeordnet ist, wobei der Halter (01) ein erstes Ende (20) mit einem Profil aufweist, auf Grund dessen der Halter (01) durch den ersten Schlitz (11) hindurch in den Gleitkanal (15) eingeführt werden kann, und ein zweites Ende (21) aufweist, das als Merkmal eine Verbindungsvorrichtung (23) zum Verbinden mit einem Schlüsselträger (P) aufweist, so dass die elektronischen Guthabenspeicherungsmittel (10) zum Herausziehen aus dem ersten Schlitz (11) bereit sind, wenn ein von der Steuereinheit (17) gesendetes Signal dem Benutzer anzeigt, dass der Vorgang beendet ist und dass der Benutzer die Mittel (0) aus dem Schlitz herausnehmen kann.

2. Universalvorrichtung nach Anspruch 1, **dadurch gekennzeichnet, dass** die elektronischen Datenlese- und -schreibmittel (171) an der Außenseite des Gehäuses (1) im Bereich des ersten Schlitzes (11) um die Ränder desselben herum angeordnet sind, wobei die elektronischen Datenlese- und -schreibmittel (171) dazu bestimmt sind, durch Lesen/Schreiben den verbleibenden Guthabenwert der elektronischen Guthabenspeicherungsmittel (0) oder eines Transponders (T) zu modifizieren, der von außen nahe an den ersten Schlitz (11) heran gebracht wurde.

3. Universalvorrichtung nach Anspruch 1, **dadurch gekennzeichnet, dass** die elektronischen Guthabenspeicherungsmittel (0) durch Zuordnung von mindestens einem Transponder (T1) gebildet werden, der in einem Halter (01) angeordnet ist, wobei der Halter (01) ein erstes Ende (20) mit einem Profil aufweist, auf Grund dessen der Halter (01) durch den ersten Schlitz (11) hindurch in den Gleitkanal (15) eingeführt werden kann, und ein zweites Ende (21) ausweist, das in einer derartigen Weise geformt ist, dass es als Schlüsselträger verwendet werden kann.

4. Universalvorrichtung nach Anspruch 1, **dadurch gekennzeichnet, dass** die elektronischen Guthabenspeicherungsmittel (0) durch Zuordnung von mindestens einem Transponder (T1) gebildet werden, der in einem Halter (01) angeordnet ist, wobei der Halter (01) ein erstes Ende (20) mit einem Profil aufweist, auf Grund dessen der Halter (01) durch den ersten Schlitz (11) hindurch in den Gleitkanal (15) eingeführt werden kann, und ein zweites Ende (21) mit einer anatomischen Form aufweist, auf Grund derer ein Benutzer das Ende leichter ergreifen kann.

5. Universalvorrichtung nach Anspruch 1 oder 3 oder 4, **dadurch gekennzeichnet, dass** mindestens ein Transponder (T1) aus dem Halter (01) herausgenommen und durch den ersten Schlitz (11) hindurch in die Universalvorrichtung eingeführt werden kann, wobei der Transponder (T1) während seines Laufes entlang dem Gleitkanal (15) zuerst der Einwirkung des Lesens/Schreibens der elektronischen Datenlese- und -schreibmittel (171) unterworfen wird und dann von dem Abgabekanal (151) durch den zweiten Schlitz (13) hindurch zurückgeführt oder von der gleichen Universalvorrichtung aufgenommen wird.

6. Universalvorrichtung nach Anspruch 1, **dadurch gekennzeichnet, dass** die elektronischen Futhabenspeicherungsvorrichtungen (0) einen elektronischen Schlüssel (02) umfassen, dessen erstes Ende (31) derart geformt ist, dass es mindestens einen Transponder (T2) aufnimmt und durch den ersten Schlitz (11) hindurch geführt und in den Gleitkanal (15) eingeführt werden kann, und dessen zweites Ende (31) eine anatomische Handhabe (33) aufweist, damit sie leichter von einem Benutzer ergriffen werden kann.

7. Universalvorrichtung nach Anspruch 1, **dadurch gekennzeichnet, dass** das Signal, durch welches die elektronischen Guthabenspeicherungsvorrichtungen (0) herausgenommen werden können, von einer LED gesendet wird.

8. Universalvorrichtung nach Anspruch 1, **dadurch gekennzeichnet, dass** das Signal, durch welches die elektronischen Guthabenspeicherungsvorrichtungen (0) herausgenommen werden können, ein akustisches Signal ist.

9. Universalvorrichtung nach Anspruch 1, **dadurch gekennzeichnet, dass** das Signal, durch welches die elektronischen Guthabenspeicheurungsvorrichtungen (0) herausgenommen werden können, eine auf einem Anzeigefeld sichtbar gemachte Mitteilung ist.

10. Universalvorrichtung nach Anspruch 1, **dadurch gekennzeichnet, dass** diese Detektierungs- und Identifizierungsmittel (16) umfasst, die in den Wänden des Gleitkanals (15) stromab von den Sensormitteln (161) angeordnet sind und mit der Steuereinheit (17) verbunden sind, und die dem Zweck dienen, den Hindurchlauf der vorgegebenen Münzen (M) zu detektieren und zu identifizieren.

11. Universalvorrichtung nach Anspruch 10, **dadurch gekennzeichnet, dass** die Detektierungs- und Identifizierungsmittel (16) Spulen sind.

12. Universalvorrichtung nach Anspruch 1, **dadurch gekennzeichnet, dass** diese von der Steuereinheit (17) betätigte Leitmittel (190) umfassen, um den Gleitkanal (15) entweder mit einem Verbindungskanal (153, um die Münzen (M) oder die Transponder (15) mit dem ausgelaufenen Guthaben zu sammeln oder mit dem Abgabekanal (151) zu verbinden, um die nicht identifizierten Münzen (M) oder die Transponder (T) mit einem verblicbenen Guthaben zurückzuweisen.

13. Universalvorrichtung nach Anspruch 1 oder 10, **dadurch gekennzeichnet, dass** die Detektierungs- und Identifizierungsmittel (16) mit den Sensormitteln (161) identisch sind.

14. Universalvorrichtung nach Anspruch 1 oder 10, **dadurch gekennzeichnet, dass** die Detektierungs- und Identifizierungsmittel (16) mit den elektronischen Datenlese- und -schreihmitteln (171) identisch sind.

15. Universalvorrichtung nach einem der vorhergehenden Ansprüche, **dadurch gekennzeichnet, dass** die Sensonnittel (161), die elektronischen Datenlese und -schreibmittel (171) und die Detektierungs- und Identifizierungsmittel (16) in einer zusätzlichen Einheit (3) angeordnet sind, die sich außerhalb des Gehäuses (1) befindet wobei die zusätzliche Einheit (3) einen Einlasskanal (35) umfasst, der im Bereich des Schlitzes (11) mit der Mündung des Gleitkanals (15) verbunden ist und einen Einlassschlitz (310) zum Einführen der elektronischen elektronischen Guthabenspeicherungsmittel (0) aufweist.

16. Universalvorrichtung nach einem der vorhergehenden Ansprüche, **dadurch gekennzeichnet, dass** diese ein elektronisches Element (A) zum Speichern und Aktualisieren des Guthabens umfasst, das an die Detektierungs- und Identifizierungsmittel (16) zum Ansammeln des Guthabens entsprechend dem Wert der eingeführten Münzen (M) wie auch an die Datenlese- und -schreibmittel (171) zum Aktualisieren des Guthabens und zum erneuten Laden der eingeführten Transponder (T) und zum Aktualisieren des Guthabens und zum erneuten Laden der elektronischen Guthabenspeicherungsmittel angeschlossen ist, die vorübergehend in die Vorrichtung eingeführt oder nahe an den ersten Schlitz (11) heran gebracht werden.

17. Universalvorrichtung nach Anspruch 15, **dadurch gekennzeichnet, dass** mit dem elektronischen Element (A) ein Banknotenleser (B) verbunden ist.

## Revendications

1. Dispositif universel pour l'identification de pièces de monnaie, de moyens de stockage de crédit électronique et transpondeurs prédéterminés, le dispositif incluant un boîtier (1) ayant, sur sa surface extérieure, une première fente rectangulaire (11) permettant d'introduire des pièces de monnaie (M) et transpondeurs (T), et une seconde fente rectangulaire (13) permettant d'expulser des pièces de monnaie (M) et transpondeurs (T), ledit boîtier (1) présentant, à l'intérieur, un canal de glissement (15) et un canal d'évacuation (151), qui sont disposés en série et s'étendent vers le bas de ladite première fente (11) à ladite seconde fente (13), ledit boîtier (1) incluant également une unité de commande (17) connectée à des moyens de capteur (161) situés sur les parois latérales dudit canal de glissement (15), à proximité de la première fente (11), afin de détecter soit l'introduction desdites pièces de monnaie prédéterminées (M) soit le code d'identification desdits transpondeurs (T), ladite unité de commande (17) étant également connectée à des moyens de lecture/écriture de données électroniques (171), qui lisent le crédit restant dans lesdits transpondeurs (T) et qui sont situés sur les parois latérales dudit canal de glissement (15) en aval desdits moyens de capteur (161), lesdits moyens de lecture/écriture de données électroniques (171) étant commandés par ladite unité de commande (17) afin de modifier, par lecture/écriture, la valeur de crédit restant dans lesdits moyens de stockage de crédit électronique (O), précédemment introduits dans ladite première fente (11) jusqu'à ce qu'ils aient atteint la zone des moyens de lecture/écriture de données électroniques (171) ;
ledit dispositif universel étant **caractérisé en ce que** lesdits moyens de stockage de crédit électronique (O) sont formés en associant au moins un transpondeur (T1) situé à l'intérieur d'un support (01), ledit support (O1) ayant une première extrémité (20) avec un profil permettant audit support (O1) d'être inséré, au travers de la première fente (11), dans ledit canal de glissement (15) et comportant une seconde extrémité (21) présentant un dispositif de couplage (23) permettant le couplage avec un porte-clés (P), de telle sorte que lesdits moyens de stockage de crédit électronique (O) sont prêts à être retirés de la première fente (11) lorsqu'un signal envoyé par ladite unité de commande (17) indique à l'utilisateur que la transaction est terminée et que l'utilisateur peut retirer les moyens (O) de la fente.

2. Dispositif universel selon la revendication 1, **caractérisé en ce que** lesdits moyens de lecture/écriture de données électroniques (171) sont situés sur la surface extérieure dudit boîtier (1) dans la zone de ladite première fente (11) autour de ses bords, lesdits moyens de lecture/écriture de données électroniques (171) étant destinés à modifier, par lecture/écriture, la valeur de crédit restante des moyens de stockage de crédit électronique (O), ou d'un transpondeur (T), amené à proximité de ladite première fente (11) à partir de l'extérieur.

3. Dispositif universel selon la revendication 1, **caractérisé en ce que** lesdits moyens de stockage de crédit électronique (O) sont formés en associant au moins un transpondeur (T1) situé à l'intérieur d'un support (O1), ledit support (O1) comportant une première extrémité (20) avec un profil permettant audit support (O1) d'être introduit au travers de la première fente (11) dans ledit canal de glissement (15) et comportant une seconde extrémité (21) configurée de telle sorte qu'elle peut être utilisée sous forme de porte-clés.

4. Dispositif universel selon la revendication 1, **caractérisé en ce que** lesdits moyens de stockage de crédit électronique (O) sont formés en associant au moins un transpondeur (T1) situé à l'intérieur d'un support (O1), ledit support (O1) comportant une première extrémité (20) avec un profil permettant audit support (O1) d'être introduit au travers de la première de fente (11) dans ledit canal de glissement (15), et une seconde extrémité (21) présentant une forme anatomique afin de permettre à un utilisateur de la saisir plus facilement.

5. Dispositif universel selon la revendication 1 ou 3 ou 4, **caractérisé en ce qu'**au moins un transpondeur (T1) peut être retiré du support (O1) et introduit au travers de ladite première fente (11) dans ledit dispositif universel, ledit transpondeur (T1) étant tout d'abord soumis à l'action de lecture/écriture desdits moyens de lecture/écriture de données électroniques (171) au cours de son passage le long dudit canal de glissement (15), puis revenant par ledit canal d'évacuation (151) au travers de ladite seconde fente (13) ou étant collecté par ce même dispositif universel.

6. Dispositif universel selon la revendication 1, **caractérisé en ce que** lesdits moyens de stockage de crédit électronique (O) incluent une clé électronique (02), dont la première extrémité (31) est configurée de manière à recevoir au moins un transpondeur (T2) et à passer au travers de la première fente (11) et à être introduite dans le canal de glissement (15), et dont la seconde extrémité (32) présente une poignée anatomique (33) afin de permettre à un utilisateur de la saisir plus facilement.

7. Dispositif universel selon la revendication 1, **caractérisé en ce que** ledit signal permettant le retrait desdits moyens de stockage de crédit électronique (O) est transmis par une LED.

8. Dispositif universel selon la revendication 1, **caractérisé en ce que** ledit signal permettant le retrait desdits moyens de stockage de crédit électronique (O) est un signal acoustique.

9. Dispositif universel selon la revendication 1, **caractérisé en ce que** ledit signal permettant le retrait desdits moyens de stockage de crédit électronique (O) est un message visualisé sur un écran.

10. Dispositif universel selon la revendication 1, **caractérisé en ce qu'**il inclut des moyens de détection et d'identification (16) qui sont situés dans les parois dudit canal de glissement (15), en aval desdits moyens de capteur (161), et en interface avec ladite unité de commande (17), et qui sont destinés à détecter et identifier le passage desdites pièces de monnaie prédéterminées (M).

11. Dispositif universel selon la revendication 10, **caractérisé en ce que** lesdits moyens de détection et d'identification (16) sont des bobines.

12. Dispositif universel selon la revendication 1, **caractérisé en ce qu'**il inclut des moyens de déflecteur (190) actionnés par ladite unité de commande (17) pour relier ledit canal de glissement (15) soit au canal de raccordement (153) afin de collecter lesdites pièces de monnaie (M) ou transpondeurs (T), le crédit étant débité, soit audit canal d'évacuation (151) afin de rejeter les pièces de monnaie (M) ou transpondeurs (T) non identifiés, le crédit étant conservé.

13. Dispositif universel selon la revendication 1 ou 10, **caractérisé en ce que** lesdits moyens de détection et d'identification (16) sont identiques auxdits moyens de capteur (161).

14. Dispositif universel selon la revendication 1 ou 10, **caractérisé en ce que** lesdits moyens de détection et d'identification (16) sont identiques auxdits moyens de capteur par lecture/écriture des données électroniques (171).

15. Dispositif universel selon l'une quelconque des revendications précédentes, **caractérisé en ce que** lesdits moyens de capteur (161), lesdits moyens de lecture/écriture de données électroniques (171) et lesdits moyens de détection et d'identification (16) sont situés à l'intérieur d'une unité supplémentaire (3), située à l'extérieur dudit boîtier (1), ladite unité supplémentaire (3) incluant un canal d'admission (35) qui rejoint l'embouchure du canal de glissement (15) dans la zone de la fente (11), et qui comporte une fente d'admission (310) permettant d'introduire lesdits moyens de stockage de crédit électronique (O).

16. Dispositif universel selon l'une quelconque des revendications précédentes, **caractérisé en ce qu'**il inclut un élément électronique de stockage et de mise à jour de valeur de crédit (A) interfacé à la fois avec lesdits moyens de détection et d'identification (16) pour accumuler le crédit correspondant à la valeur desdites pièces de monnaie (M) introduites, et avec lesdits moyens de lecture/écriture (171) pour mettre à jour et recharger le crédit desdits transpondeurs (T) introduits et pour mettre à jour et recharger le crédit desdits moyens de stockage de crédit électronique introduits momentanément dans le dispositif ou amenés à proximité de la première fente (11).

17. Dispositif universel selon la revendication 15, **caractérisé en ce qu'**un lecteur de billets de banque (B) est connecté audit élément électronique (A).
